# EUROPEAN PATENT SPECIFICATION

(11) **EP 2 053 777 B1**
(45) Date of publication and mention of the grant of the patent: **13.01.2016**
(21) Application number: 07800922.2
(22) Date of filing: 10.08.2007
(51) Int. Cl.: H04L 9/32, G06F 21/32, G06Q 20/34, G06Q 20/38, G06Q 20/40, G07F 7/12, G07C 9/00, G07F 7/10

(54) **A CERTIFICATION METHOD, SYSTEM, AND DEVICE**
ZERTIFIZIERUNGSVERFAHREN, -SYSTEM UND EINRICHTUNG
PROCÉDÉ, SYSTÈME ET DISPOSITIF DE CERTIFICATION

(30) Priority: 18.08.2006 CN 200610109879; 30.10.2006 CN 200610136498; 30.10.2006 CN 200610136497
(43) Date of publication of application: 29.04.2009
(73) Proprietor: Huawei Technologies Co., Ltd., Longgang District Shenzhen, Guangdong 518129 (CN)
(72) Inventor: LIU, Hongwei, Shenzhen, Guangdong 518129 (CN); LIU, Shuling, Shenzhen, Guangdong 518129 (CN); WEI, Jiwei, Shenzhen, Guangdong 518129 (CN); LIU, Bing, Shenzhen, Guangdong 518129 (CN)
(74) Representative: Thun, Clemens
(86) International application number: PCT/CN2007/070446
(87) International publication number: WO 2008/022585

(56) References cited:
- EP-A- 1 349 123
- WO-A-02/17114
- CN-A- 1 299 103
- CN-A- 1 372 222
- CN-A- 1 403 941
- CN-A- 1 492 373
- CN-A- 1 545 243
- CN-A- 1 558 584
- CN-A- 1 764 195
- JP-A- 09 069 079
- JP-A- 11 025 048
- JP-A- 2001 092 784
- JP-A- 2006 099 405
- US-A1- 2003 089 764
- US-A1- 2005 240 779
- US-B1- 6 321 339
- US-B1- 6 609 198
- MENEZES, VANSTONE, OORSCHOT: "Handbook of Applied Cryptography" 1997, CRC PRESS LLC , USA , XP002538437 * page 386 - page 388 *

## Description

### Field of the Invention

The present invention relates to information security technologies, and in particular to a method and system for authentication.

### Background of the Invention

With the rapid development of Internet, electronic business has been gaining popularity in many fields, such as online banks and online transactions. The traditional way of protecting personal account information by password is obviously not enough to guarantee the security of data. In recent years, Internet fraud and theft of account have become more and more serious. Therefore, it is imperative to develop higher-level security mechanism of personal information protection and authentication.

European patent application No. 1349123 A2 discloses a process for generating a unique, secure and printable identity document, for authenticating the use of the document, including generating an identity certificate for an individual. This certificate incorporates a pointer to biometric and other identifying data for the individual which are stored in a reference database. The identity certificate is encoded to produce a machine-readable printable 2-dimensional barcode as an identity document. The identity document may then be used by the document holder for generation of an encoded privilege document and this, in ture, is compared with the stored reference data, including the stored biometric when the privilege is to be exercised.

International patent application No. WO 02/17114 A1 discloses that biometric information in encoded into digital signatures and digital certificates. Means are disclosed for issuing such signatures or certificates based upon confirmation of identity. Confirmation may be made by a referee in real time so that the digital signature or certificate is issued immediately. Confirmation may be made in a kiosk or vending machine environment, through a secure connection with a referee.

"Handbook of Applied Cryptography", XP002538437 discloses identification schemes involving fixed passwords including Personal Identification Numbers (PINs), and providing so-called weak authentication, and techniques providing so-called strong authentication, including challenge-response protocols based on both symmetric and public key techniques.

The Public Key Infrastructure (PKI) has been applied in some fields. Public certificates which can be public and store public keys and other information of users are distributed to the users by the authority. The private key corresponding to the public key is kept by the users themselves. A public key has a unique relation of association with a private key, which cannot be deduced by the private key, and information encrypted by the public key can only be decrypted by the private key. Such characteristic of the PKI can have the authenticator confirm whether the user is the entity declared in the public key certificate by verifying the private key, and as a result it can assure that users' information of user would not be stolen illegally.

In the PKI mechanism, it is the key point to protect the private key of user. Private keys usually are deposited as digital information in some hardware. If a private key is lost, it means that the personal information of user may be exposed.

The technologies of biometric identification refer to the technologies that identity authentication is performing by using human physical futures or behavior futures, such as the identification technology of fingerprint, iris, etc. In recent years, biometric identification technologies are becoming more and more mature. Due to the special condition that identification is performed through Internet, identification combined with biometric features can take advantages of biometric features such as unique and stability, and provide guarantee for information security.

It is an effective way of protecting information that identity authentication is performed using personal biometric information. Taking account of the characteristics of biometric information, and the special condition that identity authentication is performed through Internet, it can form a more secure authentication architecture by combining biometric information with PKI.

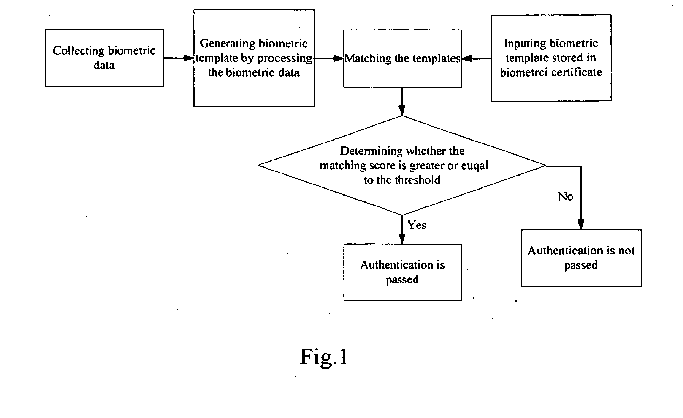

The PKI system is a mechanism for personal identification, while biometric features are the fundamental elements for verifying personal identity, so it can take advantage of both PKI and biometric features, and overcome the fault of each of the two technologies. Taking the method for authentication by matching at the client-end as an example, the detailed process is shown in Figure 1: the authenticator determines the validity of the user's identity by matching the collected biometric feature sample of the user with the biometric feature template in the biometric certificate provided by the user.

According to the various requests for different users, the service provider is able to grant different privileges to different users, using Privilege Management Infrastructure (PMI).

PMI is a combination of attribute certificate, attribute privilege, attribute certificate repository and so on, and implements any of, but not limit to, the following functions: privilege and certificate generating, management, storage, distribution and withdrawing.

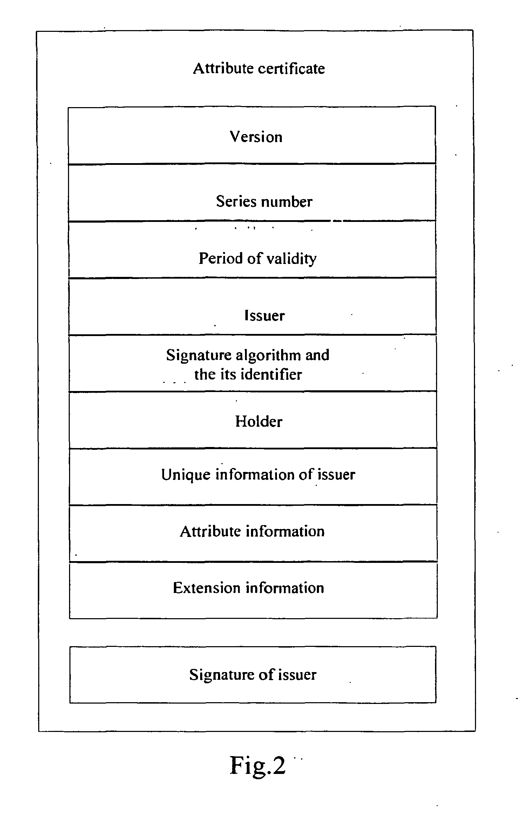

An attribute certificate (AC) defines a privilege for an entity. The combination of the entity and privilege is provided by a data structure with digital signature. Such data structure signed and managed by attribute authority is called attribute certificate. The AC includes an expanding mechanism and a series of special certificate expanding mechanism. As shown in Figure 2, the format of the attribute certificate includes any of the following ones: version, series number, period of validity, issuer, signature algorithm and the identifier thereof, holder, unique information of issuer, attribute information, extension information and signature of issuer.

PMI provides a new infrastructure for protecting information, which is closely integrated with the PKI and catalog service, and establishes a mechanism for granting particular privilege to certificated users systematically. PMI provides a systematical definition and description for the privilege management, and thus provides whole processes needed during authorization service.

Identity authentication and privilege authentication are of vital importance for data security. In prior art, there is a method for identity and privilege authentication through performing identity and privilege authentication separately, including the following steps:
when performing privilege authentication, a sever receives a request for authorization from a user;
the sever performs authentication according to preset authentication rules; and
if the authentication is passed, the sever grants the corresponding privilege to the user.

The process of performing identity authentication is similar to the process of privilege authentication, during which authentication is perform by the server according to some preset authentication rules, and the two types of authentication are performed independently. However, only to perform identity authentication or only to carry out privilege authentication cannot guarantee accuracy of the authentication.

Another method for identity and privilege authentication in prior art includes:
performing identity authentication firstly; and
performing privilege authentication, when identity authentication is passed.

Such technical scheme may improve strictness of the whole authentication process, and also accuracy. However, such process is performed only according to some preset rules so that the authentication rules cannot be adjusted in accordance with practical situations, and cannot perform authentication dynamically, as a result, the flexibility of the process of identity and privilege authentication is limited.

### Summary of the Invention

The invention is defined in the independent claims.

Particular embodiments are set out in the dependent claims.

### Brief Description of the Drawings

Figure 1 is a flow chart of the process for performing identity authentication using biometric template in the prior art;
Figure 2 shows the format of an attribute certificate;
Figure 3 shows the format of biometric extension information in the an attribute certificate;
Figure 4 is a flow chart of a method according to an embodiment of the present invention;
Figure 5 is another flow chart of a method according to an embodiment of the present invention;
Figure 6 is a structure diagram of a system according to an embodiment of the present invention;
Figure 7 is a diagram showing functions of a system according to an embodiment of the present invention;
Figure 8 is a structure diagram of a biometric processing unit according to an embodiment of the present invention;
Figure 9 is a diagram showing function of a biometric-processing unit according to an embodiment of the present invention;
Figure 10(a) ~ (c) show formats of templates of biometric security level according to embodiments of the present invention;
Figure 11 is a flow chart of a process of setting template of biometric security level according to an embodiment of the present invention;
Figure 12 is a structure diagram of a device for setting template of biometric security level according to an embodiment of the present invention;
Figure 13 is a flow chart of a process for biometric authentication in an embodiment of the present invention;
Figure 14 is a flow chart of a process according to a more detailed embodiment compared to the process shown in the Figure 13; and
Figure 15 is a structure diagram of a biometric authentication system for performing the process shown in the Figure 13.

### Detailed Description of the Embodiments

In embodiments of the present invention providing methods and systems for authentication, the rules for authentication can be adjusted according to practical situations, and the flexibility of the process for authentication can be improved.

In order to make use of biometric authentication, the PMI system should be supplemented slightly. In order to minimize the influence on the system, an extension item is added to the attribute certificate.

The extension information of the attribute certificate is mainly for declaring policies related to application of the certificate. The extension information of the attribute certificate includes the following:
basic extension information, privilege revoking extension information, root attribute authority extension information, role extension information and grant extension information, etc.

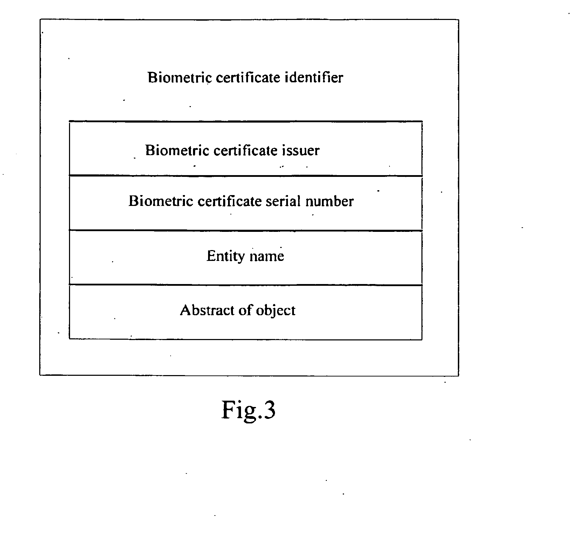

When performing privilege authentication using attribute certificate, authentication on the client's identity is performed first. Attribute certificate and biometric certificate are combined, so as to assure accuracy of relation of association between privilege and identity. Therefore, index information related to biometric certificate is added into biometric extension information of the attribute certificate, with the renewed biometric extension within the basic extension information. The biometric extension is called biometric certificate identifier, which is illustrated in Figure 3.

As illustrated in Figure 3, the biometric certificate identifier includes the following: "biometric certificate issuer and biometric certificate serial number", entity name and abstract of object, wherein:
Biometric certificate issuer and biometric certificate serial number are marks of the biometric certificate corresponding to the holder of the attribute certificate, i.e., the biometric certificate needed for identity authentication on the holder of the attribute certificate. When performing identity authentication on the holder of the attribute certificate, colleted biometric data of the holder is matched with the template of the biometric certificate to obtain the result of authentication. The biometric certificate issuer and biometric certificate serial number may be both optional.
Entity name is mark of names of one or multiple attribute certificate holders. If it is the only item in the biometric extension, any biometric certificate corresponding to subject name included in the entity name may be used for authenticating identity of the holder of the attribute certificate. In other words, as long as the subject name of biometric certificate is included in the entity name, the subject name may be used for authenticating identity of the holder. Identity authentication may be passed if any biometric certificate of the holder passes authentication. However, if there are both the item of "biometric certificate issuer and biometric certificate sequence number" and the entity name, the item of "biometric certificate issuer and biometric certificate sequence number" is taken as the first choice to perform authentication.
Abstract of object is abstract information obtained through calculation based on parameters including serial number of the biometric certificate of the attribute holder, period of validity, subject and the unique identifier of the subject, issuer and the unique identifier of the issuer, identifier of template format, biometric feature template and extension information, is used for authenticating identity of the attribute certificate holder. When performing identity authentication on the holder, the abstract is obtained based on the biometric certificate of the holder. The abstract is then compared with the object abstract information in the biometric extension of the attribute certificate, if identical the biometric certificate in accord with the attribute certificate is the right one provided by the holder, and the further process of identity authentication is performed.

The biometric extension includes at least any item of the following: "biometric certificate issuer and biometric certificate serial number", entity name and abstract of object, so as to assure that the biometric certificate can be looked up according to the associated attribute certificate.

If identity authentication is performed using PKI public key certificate including biometric template, the relation of association between attribute certificate and biometric template can be established through an index of attribute certificate to the PKI certificate. The index is not established through extension index, but through the definition by the holder of the attribute certificate.

Privileges of client-end and privilege security level are included in the attribute certificate. Biometric template of client-end is included in biometric certificate. Identity security level is included in biometric algorithm certificate, and for each level there are corresponding parameters of biometric template processing algorithm, matching algorithm parameters and threshold. Privilege security level in the attribute certificate and the identity security level in the biometric algorithm certificate are associated, and so are the value of privilege security level and the value of identity security level, and thus in this way privilege is associated with identity through the association between the two values.

When performing identity authentication, the system obtains privilege security level by extracting attribute certificate, and then determines parameters for use by matching privilege security level and identity security level extracted from biometric algorithm certificate, including parameters of biometric template processing algorithm, parameters of matching algorithm and threshold.

In an embodiment of the present invention, when an application unit receives an access request from a client-end, the application unit requests biometric certificate and attribute certificate from the client-end. Then the application unit authenticates the attribute certificate received and obtains privilege security level and access privilege from the attribute certificate. The application unit extracts the biometric algorithm certificate stored in the authentication-end and obtains identity security level. The application unit determines the parameters of biometric processing algorithm and threshold, and generates alive-being biometric template. The application unit extracts the biometric certificate of the client-end and obtains biometric template of user. The application unit matches the alive-being biometric template with the biometric template of user, and obtains a matching score. According to the threshold and the matching score, the application unit determines whether the authentication is passed or not. If the authentication is passed, the application unit returns response to the request from the client.

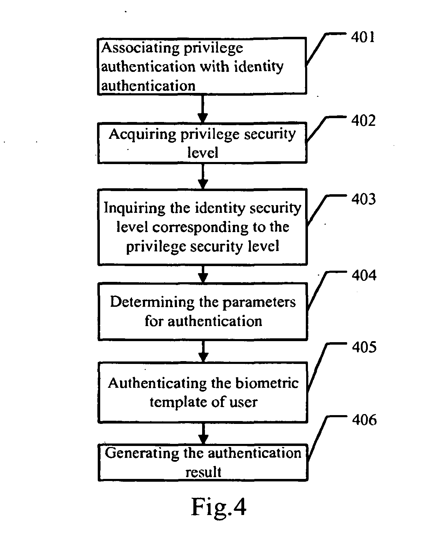

As illustrated in Figure 4, the general process of an embodiment of the present invention includes the following steps:
401: Associating privilege authentication with identity authentication;

In this step, it may be a way of associating privilege authentication with identity that the privilege security level of the attribute certificate is associated with the identity security level of the biometric algorithm certificate;
402: Acquiring privilege security level;
403: Inquiring the identity security level corresponding to the privilege security level;

In this step, it may be a way of inquiring the identity security level corresponding to the privilege security level that the identity security level corresponding to the privilege security level is inquired according to the relation of association between the privilege security level and the identity security level.

404: Determining the parameters for authentication;

In this step, it may be a way of determining the parameters for authentication that the parameters for authentication is determined according to the identity security level inquired. The parameters for authentication may include parameters of alive-being biometric template processing algorithm, parameters of matching algorithm and threshold.

405: Authenticating the biometric template of client using the parameters for authentication determined in step 404;

406: Generating the authentication result.

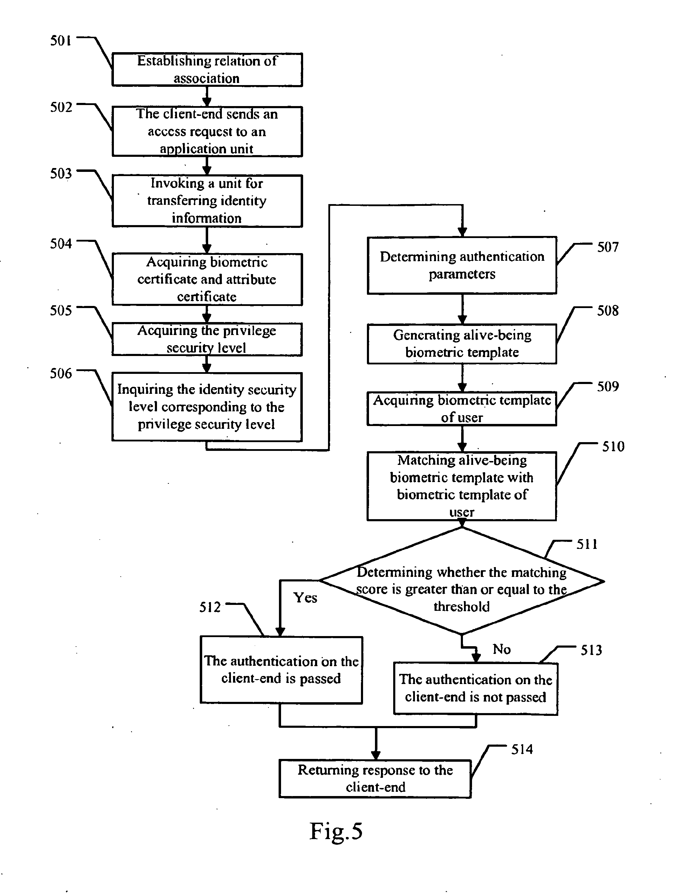

As illustrated in Figure 5, the detailed process of an embodiment of the present invention includes the following:

501: Establishing relation of association between privilege security level and identity security level;

In this step, the established relation information is stored in biometric algorithm certificate, and the relation information may also be stored in other location, such as a database, etc.

Besides this way of associating privilege authentication with identity authentication by establishing association between privilege security level and the privilege security level, there may be other ways of associating privilege authentication with identity authentication.

502: The client-end sends an access request to an application unit;

In this step, the request sent may be for applying for resources used for accessing the application unit.

503: Invoking a unit for transferring identity information;

In this step, the unit for transferring identity information is invoked to request biometric certificate and attribute certificate from the client-end.

504: Acquiring biometric certificate and attribute certificate;

In this step, after sending request for biometric certificate and attribute certificate to the client, the unit for transferring identity information receives biometric certificate and attribute certificate from the client-end.

505: Acquiring the privilege security level;

In this step, an extracting unit extracts the attribute certificate transferred by the unit for transferring identity information, to obtain the privilege security level.

506: Inquiring the identity security level corresponding to the privilege security level;

In this step, a biometric processing unit inquires the identity security level corresponding to the privilege security level according to the established relation of association between privilege security level and identity security level.

507: Determining authentication parameters;

In this step, the biometric processing unit determines authentication parameters according to the identity security level inquired, including: parameters of alive-being biometric template processing algorithm, matching algorithm parameters and threshold.

508: Generating alive-being biometric template;

In this step, the biometric processing unit generates alive-being biometric template according to the received biometric information of user and the parameters of alive-being biometric template processing algorithm.

509: Acquiring biometric template of user;

In this step, the biometric processing unit extracts biometric template of user from the biometric certificate obtained from the client-end. This step may be performed after or before acquiring biometric certificate of user.

510: Matching alive-being biometric template with biometric template of user;

In this step, an authenticating unit matches the alive-being biometric template with the biometric template of user, and obtains a matching score. There may be various ways of matching, which are not limited.

511: Determining whether the matching score is greater than or equal to the threshold, if the matching score is greater than or equal to the threshold, the process proceeds to step 512; otherwise the process proceeds to step 513;

In this step, the threshold may be one of the authentication parameters, which is obtained according to the identity security level.

512: If the authentication on the client-end is passed, the process proceeds to step 514;

513: If the authentication on the client-end is not passed, the process proceeds to step 514;

514: Returning response to the client-end.

In this step, the response including authentication result is returned to the client-end.

In an embodiment of the present invention, when the application unit receives an access request from the client-end, the application unit invokes the unit for transferring identity information. The unit for transferring identity information requests biometric certificate and attribute certificate from the client-end; the extracting unit extracts the attribute certificate to obtain privilege security level and access privilege;

The biometric processing unit invoked by the unit for transferring identity information extracts biometric algorithm certificate to obtain identity security level, and determines the biometric processing parameters and threshold according to the identity security level, and generates alive-being biometric template.

The biometric processing unit extracts the biometric certificate of the client-end to obtain biometric template of user, and matches the alive-being biometric template and the biometric template of user to get a matching score. The authenticating unit determines whether the identity authentication is passed according to the matching score and the threshold. If the identity authentication is passed, the unit for transferring identity information returns the privilege to the application unit. The application unit returns the resource requested to the client-end.

The privilege of client-end and the privilege security level are included in the attribute certificate. The biometric template of user is included in the biometric certificate on the client-end. The relation of association between privilege security level and identity security level is included in the biometric algorithm certificate. For each privilege security level or identity security level, there are corresponding parameters including alive-being biometric template processing algorithm parameters, matching algorithm parameters and threshold.

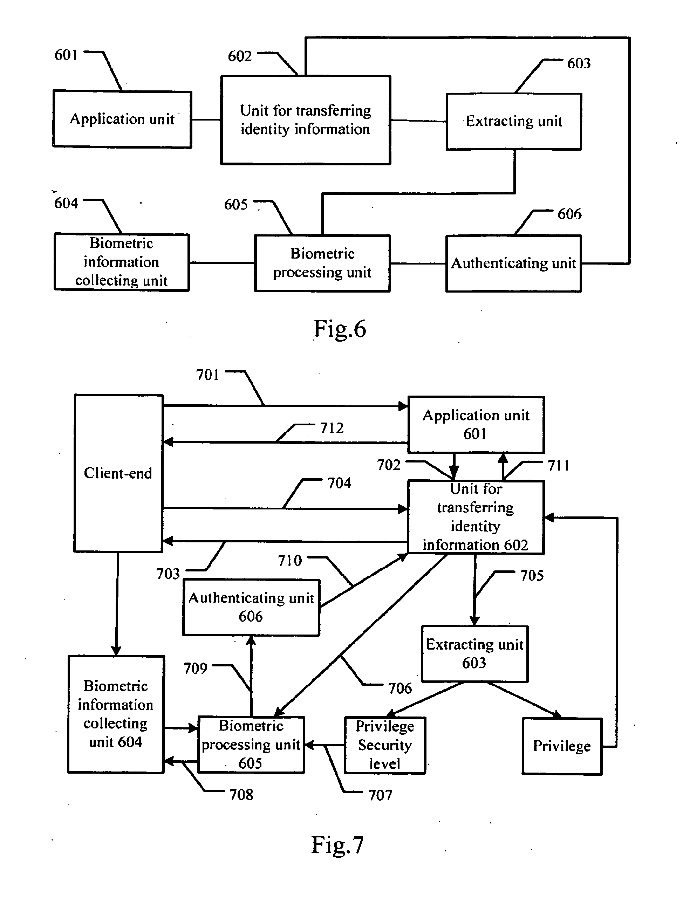

As illustrated in Figure 6, a system according to an embodiment of the present invention includes: an application unit 601, a unit for transferring identity information 602, an extracting unit 603, a biometric information collecting unit 604, a biometric processing unit 605 and an authenticating unit 606.

In this embodiment, the client-end sends an access request to the application unit 601. The application unit 601 is configured to invoke the unit for transferring identity information 602 after receiving the access request. The unit for transferring identity information 602 is configured to send a request for attribute certificate and biometric certificate to the client-end. After receiving the attribute certificate and biometric certificate from the client-end, the unit for transferring identity information 602 sends the attribute certificate and biometric certificate to the extracting unit 603 and the biometric processing unit 605. The extracting unit 603 is configured to acquire privilege security level from the attribute certificate and send the privilege security level to the biometric processing unit 605.

The unit for collecting biometric information 604 is configure to acquire biometric information of user from the client-end and send the biometric information of user to the biometric processing unit 605.

Receiving the privilege security level, the biometric processing unit 605 is configured to inquire identity security level corresponding to the privilege security level according to the relation of association between the privilege security level and identity security level. The biometric processing unit 605 determines authentication parameters according to the identity security level, and generates alive-being biometric template in terms of biometric information of user from the unit for collecting biometric information 604, and sends the authenticating unit 606 the alive-being biometric template, biometric template of the client in the biometric certificate of the client, matching algorithm parameters and threshold.

The authenticating unit 606 is configured to match the biometric template of the client with the alive-being biometric template, and send the authentication result to the unit for transferring identity information 602.

As illustrated in Figure 7, the process performed by the system according to an embodiment of the present invention includes:

701: The client-end sends an access request to the application unit;

702: The application unit invokes the unit for transferring identity information;

703: The unit for transferring identity information requests biometric certificate and attribute certificate from the client-end;

704: The client-end sends the biometric certificate and attribute certificate to the unit for transferring identity information;

705: The unit for transferring identity information invokes the extracting unit;

706:The unit for transferring identity information invokes the biometric processing unit;

707: The extracting unit verifies validity of the attribute certificate, extracts the privilege and the privilege security level, and sends the privilege security level to the biometric processing unit.

708: The biometric processing unit requests the client-end to input the corresponding biometric information of use; after acquiring the biometric information of user from the client-end, the unit for collecting biometric information sends the biometric information of user to the biometric processing unit via the corresponding software module.

709: The biometric processing unit processes the biometric information of user from the biometric information collecting unit to generate alive-being biometric template, and sends the authenticating unit the biometric template in the biometric certificate and the alive-being biometric template;

710: The authenticating unit matches the biometric template of the client with the alive-being biometric template to get a matching score, determines the result of "Accept "(Y) or " Deny"(N) according to the matching score and the threshold, and then sends the result to the unit for transferring identity information;

711: The unit for transferring identity information extracts the (access) privilege from the attribute certificate, and sends it to the application unit;

712: The application unit processes requests from the client-end according to the (access) privilege, and sends the processing result to the client-end.

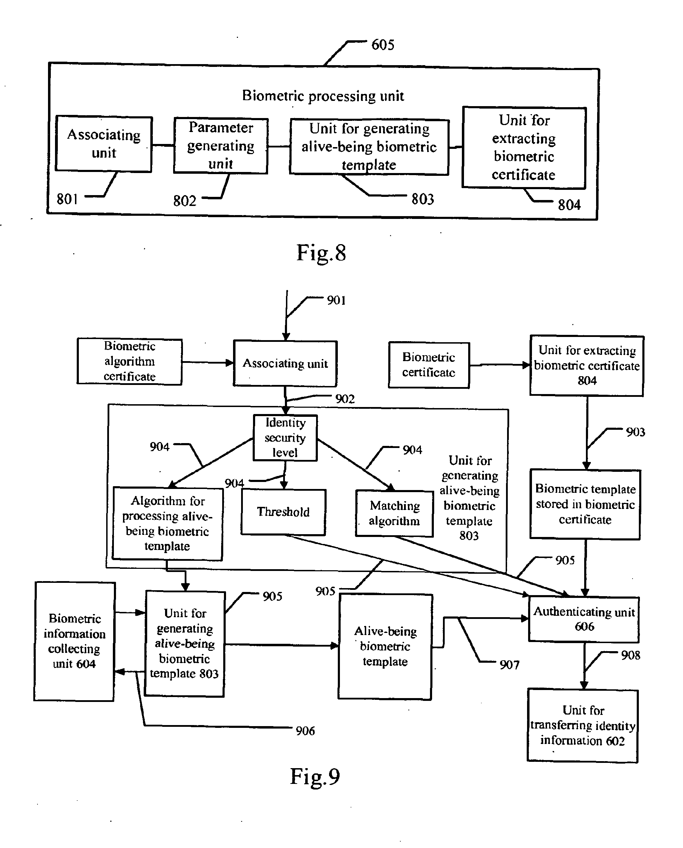

As illustrated in Figure 8, an embodiment of the present invention' biometric processing unit 605 i.e. a device for biometric processing includes: an associating unit 801, a parameter generating unit 802, a unit for generating alive-being biometric template 803 and a unit for extracting biometric certificate 804. The associating unit 801 is configured to acquire relation of association between privilege security level and identity security level, inquire the identity security level corresponding to the privilege security level, and send the inquired identity security level to the parameter generating unit 802;

The parameter generating unit 802 is configured to generate the authentication parameters corresponding to the identity security level received, and send the authentication parameters to unit for generating alive-being biometric template 803; the unit for generating alive-being biometric template 803 is configured to generate alive-being biometric template in terms of the authentication parameters. The unit for extracting biometric certificate 804 extracts biometric template of user from the biometric certificate.

As illustrated in Figure 9, the process performed by an embodiment of the present invention' biometric processing unit includes:

901: Acquiring privilege security level;

902: The associating unit acquires relation of association between privilege security level and identity security level, inquires the identity security level corresponding to the privilege security level, and sends the identity security level to the parameter generating unit;

903: The unit for extracting biometric certificate extracts the biometric certificate from the client-end to obtain the biometric template of user;

904: The parameter generating unit generates the authentication parameters corresponding to the identity security level received, including parameters of algorithm for processing alive-being biometric template, threshold and matching algorithm parameters;

905: The parameter generating unit sends the parameters of algorithm for processing alive-being biometric template to the unit for generating alive-being biometric template, and sends the threshold and matching algorithm parameters to the authenticating unit.

906: Requesting the client-end to input the corresponding biometric information of user; after acquiring the biometric information of user, the unit for collecting biometric information sends the biometric information of user to the unit for generating alive-being biometric template via the corresponding software module.

907: The unit for generating alive-being biometric template processes biometric information of user to generate alive-being biometric template, and sends the alive-being biometric template to the authenticating unit;

908: The authenticating unit matches the biometric template of user with the alive-being biometric template to get a matching score, determines the result of "Accept"(Y) or "Deny"(N) according to the matching score and the threshold, and sends the result to the unit for transferring identity information;

Based on the foregoing methods for authentication and what are illustrated in Figure 8 and 9, an embodiment of the present invention provides a template of biometric security level, and a method and system for performing biometric authentication using the template of biometric security level.

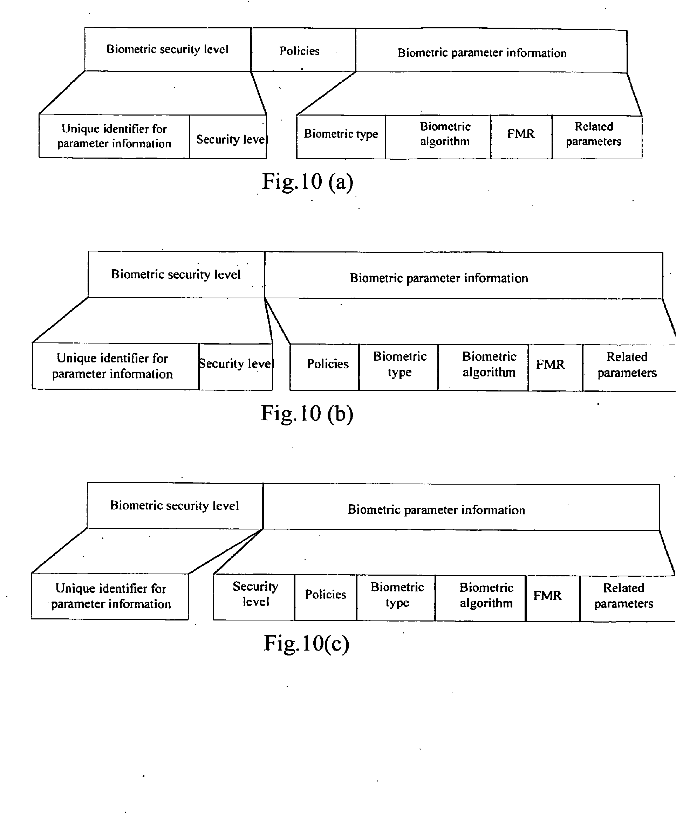

In the embodiment of the present invention, the template of biometric security level includes biometric security level, policies and biometric parameter information, whose format is illustrated in Figure 10 (a), Figure 10 (b) and Figure 10 (c). It should be noted that the format of template of biometric security level may be in other forms besides those illustrated.

As illustrated in Figure 10(a), the template of biometric security level of an embodiment includes the following:
biometric security level, unique identifier for parameter information, security level, policies, biometric parameter information, biometric type, biometric algorithm, FMR and related parameters, wherein:
   the biometric security level may include unique identifier for parameter information and security level;
   the unique identifier for parameter information is configured to distinguish the parameters corresponding to the biometric security level uniquely, such as biometric parameter information and Hash value of security level and so on. This item together with security level may be provided to the client-end or a certain database. This item may be Hash value or encrypted value of parameter information.

The security level may be the mark of biometric security represented by certain policy and biometric parameter information. The basis to determine the security level includes: the policy and the value of False Match Rate corresponding to the same algorithm and the same biometric type related to the policy. The more the conditions included in the policy there are, the high the security level is, and the less FMR value is.

The policies may include: single-mode biometric authentication, "single-mode biometric authentication + alive-being checking", multiple-mode biometric authentication, and "multiple-mode biometric authentication + alive-being checking", etc. The policies may be extended depending on demand.

The single-mode biometric authentication may be to perform authentication using one single biometric type, for example, fingerprint, iris, venation, etc. There may be a certain device for identifying alive-being biometric features when performing alive-being biometric checking. The multiple-mode biometric authentication is to perform authentication using various alive-beings or different types of biometric features of the same alive-being.

The biometric parameter information may include: biometric type, biometric algorithm, FMR value and related parameters.

The biometric type may be the mark of biometric feature used for biometric authentication, including fingerprint, iris, face feature, and various combinations of biometric features as such fingerprint plus iris, etc.

The biometric algorithm may be the biometric processing algorithm used for performing biometric identification, including algorithm for processing alive-being biometric template and algorithm for matching biometric template, etc.

The biometric algorithm FMR may be a series of values corresponding to a certain biometric algorithm, which represents the false matching rate. The less FMR is, the higher the biometric security level is.

The related parameters may be added into the template of biometric security level on demand.

In terms of the foregoing formats, a list of biometric security level including policies, biometric parameters and security level, which illustrates identity security level, is as shown in Table 1:

**Table 1**

| **Biometric security level** | | **Policies** | **Biometric parameter information** | | |
|---|---|---|---|---|---|
| Hash or encrypted value i | Biometric security (Ai) | Single-mode (A) | Biometric type | Biometric algorithm i | FMR i |
| Hash or encrypted value j | Biometric security (Bj) | Single-mode + alive-being checking (B) | Biometric type | Biometric algorithm j | FMR j |
| Hash or encrypted value k | Biometric security (Ck) | Multiple-mode (C) | Biometric type | Biometric algorithm k | FMR k |
| Hash or encrypted value l | Biometric security (Dl) | Multiple-mode + alive-being checking (D) | Biometric type | Biometric algorithm i | FMR l |
| ... | ... | ... | ... | ... | ... |

As illustrated in Table 1, the biometric level increases from top to bottom row by row.

There is one composite item, i.e. the unique identifier for parameter information, including: "Hash or encrypted value I", "Hash or encrypted value j", "Hash or encrypted value k", and "Hash or encrypted value 1".

Security level is associated with policies and FMR. The basis to determine the security level may be to determine the value of security level according to the policy and the FMR value corresponding to the same algorithm and the same biometric type associated to a certain policy. The more conditions of policy there are, the less FMR value is, and the higher the security level is. The relation of association between the FMR value and the security level is adjusted when needed to make the value of security level reflect the value of biometric security level.

As illustrated in Table 1, the security level of policies increases in such order: single-mode < "single-mode + alive-being checking" < multiple-mode < "multiple-mode + alive-being checking". The more conditions of policy there are, the higher the security level is.

Biometric algorithm: When the policy is the single-mode, the same biometric type may correspond to a plurality of biometric processing algorithms, for example, various algorithms for processing fingerprint. When the policy is the multiple-mod, the same combination of biometric types may correspond to combination of a plurality of algorithms. For example, the combination of "fingerprint + iris" can correspond to combination of "fingerprint algorithm 1 + iris algorithm 1", or the combination of "fingerprint algorithm 2 + iris algorithm 2".

FMR value: each algorithm or combination of algorithms may correspond to a plurality of FMR values; there may be a series of values determining the security level.

For example, when the policy is A, the biometric type is B and the biometric algorithm is C, the FMR values are 1, 2 and 3, which determine the security level.

An embodiment of the present invention is illustrated in Table 2:

**Table 2**

| **Hash value** | **Biometric security level** | **Policies** | **Biometric type** | **Biometric algorithm** | **Algorithm FMR** | **Related Parameters** |
|---|---|---|---|---|---|---|
| Single-mode(A) | | | | | | |
| Hash 111 | A1 | Single-mode(A) | Fingerprint | Fingerprint algorithm 1 | FMRA111 | |
| HashA112 | A2 | Single-mode | Fingerprint | Fingerprint algorithm 1 | FMRA112 | |
| ... | ... | ... | ... | ... | ... | ... |
| HashA11i | Ai | Single-mode | Fingerprint | Fingerprint algorithm 1 | FMRA11i | |
| HashA121 | A1 | Single-mode | Fingerprint | Fingerprint algorithm 2 | FMRA121 | |
| HashA122 | A2 | Single-mode | Fingerprint | Fingerprint algorithm 2 | FMRA122 | |
| ... | ... | ... | ... | ... | ... | ... |
| HashA12i | Ai | Single-mode | Fingerprint | Fingerprint algorithm 2 | FMRA12i | |
| HashA211 | A1 | Single-mode | iris | Iris algorithm 1 | FMRA211 | |
| HashA212 | A2 | Single-mode | iris | Iris algorithm 1 | FMRA212 | |
| ... | ... | ... | ... | ... | ... | ... |
| HashA21i | Ai | Single-mode | iris | Iris algorithm 1 | FMRA21i | |
| HashA221 | A1 | Single-mode | iris | Iris algorithm 2 | FMRA221 | |
| HashA222 | A2 | Single-mode | iris | Iris algorithm 2 | FMRA222 | |
| ... | ... | ... | ... | ... | ... | ... |
| HashA22i | Ai | Single-mode | iris | Iris algorithm 2 | FMRA22i | |
| ... | ... | ... | ... | ... | ... | ... |
| Single-mode +alive-being checking (B) | | | | | Note: FMRA = FMRB | |
| HashB111 | B1 | Single-mode +alive-being checking (B) | Fingerprint | Fingerprint algorithm 1 | FMRB111 | |
| HashB112 | B2 | Single-mode +alive-being checking | Fingerprint | Fingerprint algorithm 1 | FMRB112 | |
| ... | ... | ... | ... | ... | ... | ... |
| HashB111 | Bi | Single-mode +alive-being checking | Fingerprint | Fingerprint algorithm 1 | FMRB11i | |
| Hash121 | B1 | Single-mode +alive-being checking | Fingerprint | Fingerprint algorithm 2 | FMRB121 | |
| HashB122 | B2 | Single-mode +alive-being checking | Fingerprint | Fingerprint algorithm 2 | FMRB122 | |
| ... | ... | ... | ... | ... | ... | ... |
| HashB12i | Bi | Single-mode +alive-being checking | Fingerprint | Fingerprint algorithm 2 | FMRB12i | |
| HashB211 | B1 | Single-mode +alive-being checking | iris | Iris algorithm1 | FMRB211 | |
| HashB212 | B2 | Single-mode +alive-being checking | iris | Iris algorithm 1 | FMRB212 | |
| ... | ... | ... | ... | ... | ... | ... |
| HashB21i | Bi | Single-mode +alive-being checking | iris | Iris algorithm1 | FMRB21i | |
| HashB221 | B1 | Single-mode +alive-being checking | Iris | Iris algorithm2 | FMRB221 | |
| HashB222 | B2 | Single-mode +alive-being checking | Iris | Iris algorithm2 | FMRB222 | |
| ... | ... | ... | ... | ... | ... | ... |
| HashB22i | Bi | Single-mode +alive-being checking | iris | Iris algorithm2 | FMRB22i | |
| ... | ... | ... | ... | ... | ... | ... |
| Multiple-mode (C) | | | | | | |
| HashC111 | C1 | Multiple-mode (C) | Fingerprint + Iris | Fingerprint algorithm 1 + Iris algorithm1 | FMRC111 | |
| HashC112 | C2 | Multiple-mode | Fingerprint + Iris | Fingerprint algorithm 1 + Iris algorithm 1 | FMRC112 | |
| ... | ... | ... | ... | ... | ... | ... |
| HashC11i | Ci | Multiple-mode | Fingerprint + Iris | Fingerprint algorithm 1 + Iris algorithm1 | FMRC11i | |
| HashC121 | C1 | Multiple-mode | Fingerprint + Iris | Fingerprint algorithm 1 + Iris algorithm2 | FMRC121 | |
| HashC122 | C2 | Multiple-mode | Fingerprint + Iris | Fingerprint algorithm 1 + Iris algorithm2 | FMRC122 | |
| ... | ... | ... | ... | ... | ... | ... |
| HashC12i | Ci | Multiple-mode | Fingerprint + Iris | Fingerprint algorithm 1 + Iris algorithm2 | FMRC12i | |
| HashC131 | C1 | Multiple-mode | Fingerprint + Iris | Fingerprint algorithm 2 + Iris algorithm 1 | FMRC131 | |
| HashC 132 | C2 | Multiple-mode | Fingerprint + Iris | Fingerprint algorithm 2 + Iris algorithm1 | FMRC132 | |
| ... | ... | ... | ... | ... | ... | ... |
| HashC13i | Ci | Multiple-mode | Fingerprint + Iris | Fingerprint algorithm 2 + Iris algorithm1 | FMRC13i | |
| HashC211 | C1 | Multiple-mode | Fingerprint + Face | Fingerprint algorithm 1 + Face algorithm1 | FMRC211 | |
| HashC212 | C2 | Multiple-mode | Fingerprint + Face | Fingerprint algorithm 1 + Face algorithm1 | FMRC212 | |
| ... | ... | ... | ... | ... | ... | ... |
| HashC21i | Ci | Multiple-mode | Fingerprint + Face | Fingerprint algorithm 1 + Face algorithm1 | FMRB21i | |
| HashC221 | C1 | Multiple-mode | Fingerprint + Face | Fingerprint algorithm 1 + Face algorithm2 | FMRC221 | |
| HashC222 | C2 | Multiple-mode | Fingerprint + Face | Fingerprint algorithm 1 + Face algorithm2 | FMRC222 | |
| ... | ... | ... | ... | ... | ... | |
| HashC22i | Ci | Multiple-mode | Fingerprint + Face | Fingerprint algorithm 1 + Face algorithm2 | FMRC22i | |
| HashC231 | C1 | Multiple-mode | Fingerprint + Face | Fingerprint algorithm 2 + Face algorithm1 | FMRC231 | |
| HashC232 | C2 | Multiple-mode | Fingerprint + Face | Fingerprint algorithm2 + Face algorithm1 | FMRC232 | |
| ... | ... | ... | ... | ... | ... | |
| HashC23i | Ci | Multiple-mode | Fingerprint + Face | Fingerprint algorithm2 + Face algorithm 1 | FMRC23i | |
| ... | ... | ... | ... | ... | ... | |

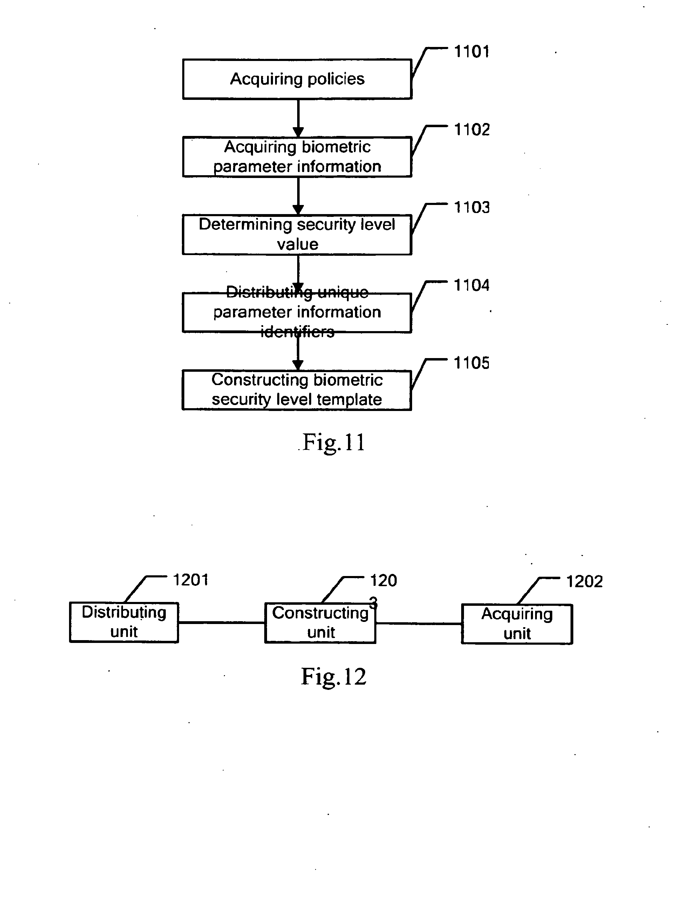

As illustrated in Figure 11, the method for setting template of biometric security level in an embodiment of the present invention includes the following steps:

1101: Acquiring policies;

In this step, the policies including single-mode biometric authentication, "single-mode biometric authentication + alive-being checking", multiple-mode biometric authentication, "multiple-mode biometric authentication + alive-being checking" and so on, is acquired. The policies may be extended on demand.

1102: Acquiring biometric parameter information;

In this step, the biometric parameter information includes: biometric type, and/or biometric algorithm, and/or FMR value, and/or other related parameters.

1103: Determining security level value;

In this step, the security level values are determined according to policy and the FMR value corresponding to the same algorithm and the same biometric type in accordance to the policy. The more conditions of the policy there are, the smaller the FMR value is, and the higher the security level is.

1104: Distributing unique parameter information identifiers;

In this step, the unique parameter information identifier may include biometric parameter information, Hash value or encrypted value of the security level. The unique parameter information identifier may be other identifier that may identify biometric parameter information uniquely.

1105: Constructing template of biometric security level.

As illustrated in Figure 12, a device according to an embodiment of the present invention for setting template of biometric security level includes:
a distributing unit 1201, configured to distribute the unique parameter information identifiers for each of templates of biometric security level;
an acquiring unit 1202, configured to determine the value of security level and acquire biometric parameter information and the policy selected by user; and
a constructing unit 1203, configured to construct template of biometric security level according to the unique parameter information identifier, security level, policies and biometric parameter information.

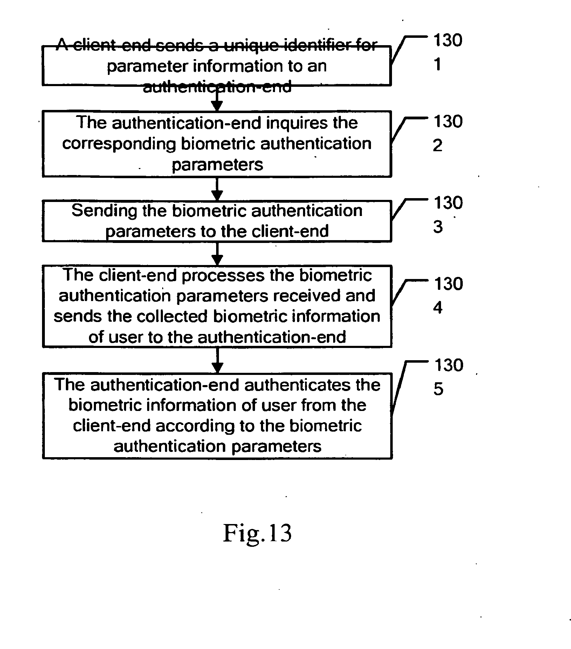

Based on the foregoing template of biometric security level, a process illustrated in Figure 13 for biometric authentication includes the following steps:

1301: A client-end sends a unique identifier for parameter information to an authentication-end;

In this step, there are two ways as follow in which the client-end sends the unique identifier for parameter information to the authentication-end:

### 1. Binding way:

A list of biometric security level is generated according to policies, biometric parameters and corresponding security levels which are obtained via evaluating various biometric algorithms by biometric authority organization. The list of biometric security level may include a plurality of biometric security templates in a certain order.

In this embodiment of the present invention, the template of biometric security level may include: biometric security level and biometric parameter information. The biometric security level may include a unique identifier for parameter information, security level and policies. Biometric parameter information may include biometric type, biometric algorithm, FMR value or other related parameters. It should be noted that the format of template of biometric security level may be in other formats.

### 2. Independent way:

To use the list of biometric security level independently may be that the list of biometric security level is not stored in the biometric algorithm certificate, but in a database or a file, and when used, the list is invoked from the database or file.

If the unique identifier for parameter information is bound with the attribute certificate, the mechanism of invoking is the same as the mechanism of binding. If the unique identifier for parameter information is not bound with the attribute certificate, the unique identifier for parameter information corresponding to each user may be stored in database. When used, the corresponding unique identifier for parameter information and security level are invoked from the database or the third party, instead of being invoked from the attribute certificate.

1302: The authentication-end inquires the corresponding biometric authentication parameters.

In this step, after receiving the unique identifier for parameter information, based on the mechanism of binding, the authentication-end inquires from the list of biometric security level stored in the biometric algorithm certificate, the corresponding unique identifier for parameter information and its security level, policies, biometric type, biometric algorithm and FMR thereof.

1303: Sending the biometric authentication parameters to the client-end;

In this step, the authentication-end sends the biometric authentication parameters acquired to the client-end.

1304: The client-end processes the biometric authentication parameters received and sends the collected biometric information of user to the authentication-end.

In this step, that the client processes the biometric authentication parameters received may be an optional process, which may include:

The client-end authenticates the policy received, if the authentication is passed, consequent process may be performed and if the authentication is not passed, consequent process may be denied.

1305: The authentication-end authenticates the biometric information of user from the client-end according to the biometric authentication parameters;

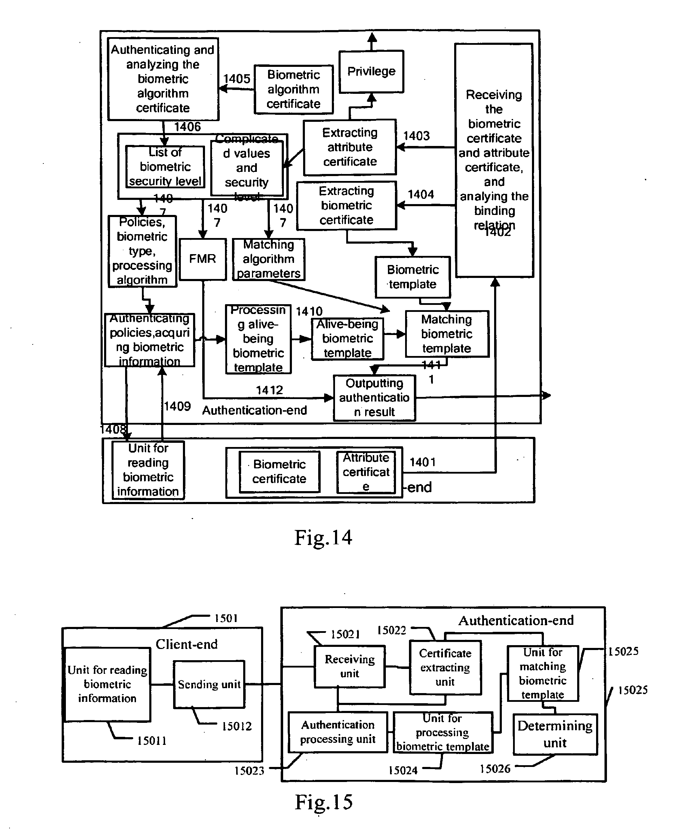

As illustrated in Figure 14, the process for biometric authentication in an embodiment of the present invention includes:

1401: The client-end sends biometric certificate and attribute certificate to the authentication-end;

1402: The authentication-end receives the biometric certificate and attribute certificate, authenticate the validity of the biometric certificate and attribute certificate, and analyzes the binding relation between the biometric certificate and attribute certificate.

1403: Acquiring the privilege of user, unique identifier for parameter information and security level or any other identifiers that can distinguish parameters, i.e. encryption via analyzing the attribute certificate;

1404: Analyzing the biometric certificate to obtain biometric template of user;

In this step, if there is more than one biometric template of user, the corresponding biometric template of user is selected according to the biometric type;

1405: Authenticating and analyzing the biometric algorithm certificate stored on authentication-end, and obtaining the list of biometric security level;

1406 ~ 1407: Searching corresponding biometric authentication parameters in the list of biometric security level, according to the unique identifier for parameter information and security level;

In these steps, the complicated values include: "Hash value or encrypted value i", "Hash value or encrypted value j", "Hash value or encrypted value k", "Hash value or encrypted value 1', where the Hash values and encrypted values are different to each other.

In these steps, the biometric authentication parameters include policies, biometric type, biometric algorithm and FMR value (or threshold), which may be divided into three parts:
1. the first part: policies, biometric type and processing algorithm of biometric algorithm;
2. the second part: FMR value; and
3. the third part: matching algorithm of biometric algorithm.

These three parts are respectively sent to different units for processing.

1408: The authentication-end sends policies to the client-end, and requests the client-end to authenticate the policies, if the authentication on the policies is not passed, the consequent processes may be denied.

1409: If the authentication on the policies is passed, the client-end determines whether there is biometric information of user needed for authentication stored on the client-end; if not, the user is indicated to input the corresponding biometric information of user to the client-end via input equipment. After collecting biometric information of user, the client-end sends the biometric information of user to the authentication-end. After receiving the biometric information of user, the authentication-end sends the biometric information of user to a unit for processing alive-being biometric template. The unit for processing alive-being biometric template may be set on the authentication-end, or on the client-end, or the third party. The unit for processing alive-being biometric template may equal to the foregoing unit for generating alive-being biometric template.

1410: The unit for processing alive-being biometric template processes the biometric information from the authentication-end, to obtain alive-being biometric template;

1411: The unit for matching alive-being biometric template matches the alive-being biometric template with the biometric template of user selected in step 1404 and gets matching score according to the biometric template of user selected in step 1404 and the biometric authentication parameters searched in step 1407;

1412: Determining whether the authentication is passed or not according to the FMR values, to obtain the authentication result;

In this embodiment, the list of biometric security level is stored in biometric algorithm certificate, and the unique identifier for parameter information is bound with attribute certificate. If the list of biometric security level is not stored in the biometric algorithm certificate, or the unique identifier for parameter information is not bound with the attribute certificate, the process of authentication almost remains unchanged, except that the location of the list of biometric security level or the location of the unique identifier for parameter information is changed.

As illustrated in Figure 15, the system for biometric authentication corresponding to the method for biometric authentication includes: a client-end 1501 and an authentication-end 1502.

The client-end 1501 is configured to send a unique identifier for parameter information to the authentication-end.

The authentication-end is configured to inquire the corresponding biometric authentication parameters by matching the unique identifier for parameter information with the identifier corresponding to the established list of biometric security level, and send the biometric authentication parameters to the client-end.

The client-end 1501 processes the received biometric authentication parameters from the authentication-end, and sends the biometric information of user to the authentication-end 1502. Processing the biometric authentication parameters by the client-end is optional. The authentication-end may send the policies within the authentication parameters to the client-end. If authentication performed on the policies by the client-end is passed, the consequent processes may be performed by the authentication-end; if authentication performed on the policies is not passed, the authentication-end may not be performed.

The authentication-end 1502 performs biometric authentication on the biometric information of user according to the biometric parameters.

The client-end 1501 includes a unit for reading biometric information 15011 and a sending unit 15012.

The unit for reading biometric information 15011 is configured to read biometric information of user provided by the user, and send the biometric information of user to the authentication-end 1502 via the sending unit 15012.

The sending unit 15012 is configured to send biometric certificate which includes biometric template of user and the attributer certificate including the unique identifier for parameter information to the authentication-end 1502.

The authentication-end 1502 includes: a receiving unit 15021, a certificate extracting unit 15022, an authentication processing unit 15023, a unit for processing biometric template 15024, a unit for matching biometric template 15025 and a determining unit 15026.

The receiving unit 15021 is configured to receive biometric certificate and attribute certificate from the sending unit 15012, send the biometric certificate and attribute certificate to the certificate extracting unit 15022; receive biometric information of user from the client-end 1501, and send the biometric information of user to the authentication processing unit 15023.

The certificate extracting unit 15022 is configured to extract biometric template of user from biometric certificate, send the biometric template of user to the unit for matching biometric template 15025, send the result extracted from the attribute certificate to the authentication processing unit 15023, and send the result extracted from the biometric algorithm certificate to the authentication processing unit 15023.

The authentication processing unit 15023 is configured to acquire biometric information of user from the receiving unit 15021 according to the result extracted form the biometric algorithm certificate, and send the biometric information of user to the unit for processing biometric template 15024.

The unit for processing biometric template 15024 is configured to generate alive-being biometric template according to the biometric information of user from the authentication processing unit 15023, and send the alive-being biometric template to the unit for matching biometric template 15025.

The unit for matching biometric template 15025 is configured to match the alive-being biometric template from the unit for processing biometric template 15024 with the biometric template of user from the certificate extracting unit 15022, to get a matching score; send the matching score to the determining unit 15026.

The determining unit 15026 is configured to determine whether the authentication is passed or not according to the matching score from the unit for matching biometric template 15025, and output the result of authentication.

The methods, devices and systems for authentication according to the embodiments of the invention have been described in details above, and the above descriptions of the embodiments are provided only to facilitate understanding of the method according to the invention. It will be appreciated for those ordinarily skilled in the art that modifications are possible in specific implementations and applications of the invention without departing from the invention. Accordingly, the specification shall not be taken in any way of limiting the scope of the invention as defined in the appended claims.

## Claims

1. A method for authentication through combination of identity and privilege, comprising:
acquiring the privilege security level corresponding to a client-end (402);
inquiring the identity security level corresponding to the privilege security level according to an established relation of association between privilege security level and identity security level (403);
determining authentication parameters for identity authentication according to the identity security level (404);
performing identity authentication on the client-end using the authentication parameters (405); and
obtaining an authentication result (406).

2. The method for authentication through combination of identity and privilege according to claim 1, wherein the established relation of association between privilege security level and identity security level is stored in a biometric algorithm certificate, or in a database, or in a file.

3. The method for authentication through combination of identity and privilege according to claim 1, wherein the acquiring the privilege security level corresponding to a client-end comprises:
receiving an access request from the client-end (502);
sending a request for biometric certificate and attribute certificate to the client-end (503); and
acquiring the privilege security level from the attribute certificate received from the client-end (504~505).

4. The method for authentication through combination of identity and privilege according to claim 1, wherein the authentication parameters comprise:
parameters of algorithm for processing alive-being biometric template, matching algorithm parameters and threshold;
the performing identity authentication on the client-end using the authentication parameters comprises:
acquiring biometric template of user from the biometric certificate received from the client-end;
generating alive-being biometric template according to the biometric information of user received from the client-end;
matching the alive-being biometric template with the biometric template of user to obtain a matching score;
generating the result that the authentication on the client-end is passed if the matching score is greater than or equal to the threshold; and
generating the result that the authentication on the client-end is not passed if the matching score is less than the threshold.

5. A system for authentication through combination of identity and privilege, comprising:
a extracting unit, configured to acquire the privilege security level corresponding to a client-end, and send the privilege security level to the biometric processing unit;
a biometric processing unit, configured to inquire the identity security level corresponding to the privilege security level according to an established relation of association between privilege security level and identity security level, determine the authentication parameters for identity authentication according to the identity security level, and send the authentication parameters to the authenticating unit; and
an authenticating unit, configured to perform identity authentication on the client-end using the authentication parameters and obtain an authentication result.

6. The system for authentication through combination of identity and privilege according to claim 5, further comprising: an application unit (601), a unit configured to transfer identity information (602), and a unit for collecting biometric information (604), wherein:
the application unit is configured to receive an access request from the client-end; invoke the unit for transferring identity information after receiving the access request from the client-end;
the unit configured to transfer identity information is adapt to send a request for attribute certificate and biometric certificate to the client-end, receive the attribute certificate and biometric certificate from the client-end, send the attribute certificate to the extracting unit, send the biometric certificate to the authenticating unit, and invoke the biometric processing unit;
the unit configured to collecting biometric information is adapt to collect biometric information of user and send the biometric information of user to the biometric processing unit.

7. The system for authentication through combination of identity and privilege according to claim 5, wherein the biometric processing unit (605) comprises an associating unit (801), a parameter generating unit (802), a unit for generating alive-being biometric template (803), and a unit for extracting biometric certificate (804), wherein:
the associating unit is configured to acquire the relation of association between privilege security level and identity security level; inquire the identity security level corresponding to the privilege security according to the relation of association between privilege security level and identity security level; send the identity security level to the parameter generating unit;
the parameter generating unit is configured to generate authentication parameters corresponding to the identity security level received from the associating unit, and send the parameters to the unit for generating alive-being biometric template;
the unit for generating alive-being biometric template is configured to generate alive-being biometric template acco rding to the authentication par ameters from the parameter generating unit and biometric information of user; and
the unit for extracting biometric certificate is configured to extract biometric template of user from a received biometric certificate.

## Patentansprüche

1. Verfahren zur Authentifizierung durch Kombination von Identität und Privileg, umfassend:
Beschaffen des Privileg-Sicherheitsniveaus, das einem Client-Ende entspricht (402);
Erfragen des Identitäts-Sicherheitsniveaus, das dem Privileg-Sicherheitsniveau entspricht, gemäß einer hergestellten Beziehung der Assoziation zwischen Privileg-Sicherheitsniveau und Identitäts-Sicherheitsniveau (403);
Bestimmen von Authentifikationsparametern zur Identitätsauthentifikation gemäß dem Identitäts-Sicherheitsniveau (404);
Durchführen von Identitätsauthentifikation an dem Client-Ende unter Verwendung der Authentifikationsparameter (405); und
Erhalten eines Authentifikationsergebnisses (406).

2. Verfahren zur Authentifikation durch Kombination von Identität und Privileg nach Anspruch 1, wobei die hergestellte Beziehung der Assoziation zwischen Privileg-Sicherheitsniveau und Identitäts-Sicherheitsniveau in einem biometrischen Algorithmuszertifikat oder in einer Datenbank oder in einer Datei gespeichert wird.

3. Verfahren zur Authentifikation durch Kombination von Identität und Privileg nach Anspruch 1, wobei das Beschaffen des Privileg-Sicherheitsniveaus, das einem Client-Ende entspricht, Folgendes umfasst:
Empfangen einer Zugriffsanforderung von dem Client-Ende (502);
Senden einer Anforderung des biometrischen Zertifikats und Attribut-Zertifikats zu dem Client-Ende (503); und
Beschaffen des Privileg-Sicherheitsniveaus aus dem von dem Client-Ende empfangenen Attribut-Zertifikat (504~505).

4. Verfahren zur Authentifikation durch Kombination von Identität und Privileg nach Anspruch 1, wobei die Authentifikationsparameter Folgendes umfassen:
Algorithmus-Parameter zur Verarbeitung von biometrischen Vorlagen lebender Wesen, Abstimmalgorithmusparametern und Schwelle;
wobei das Durchführen von Identitätsauthentifikation am Client-Ende unter Verwendung der Authentifikationsparameter Folgendes umfasst:
Beschaffen der biometrischen Vorlage des Benutzers aus dem von dem Client-Ende empfangenen biometrischen Zertifikat;
Erzeugen einer biometrischen Vorlage eines lebenden Wesens gemäß den von dem Client-Ende empfangenen biometrischen Informationen des Benutzers;
Abstimmen der biometrischen Vorlage eines lebenden Wesens mit der biometrischen Vorlage des Benutzers, um eine Abstimmungsbewertung zu erhalten;
Erzeugen des Ergebnisses, dass die Authentifikation an dem Client-Ende bestanden ist, wenn die Abstimmungsbewertung größer oder gleich der Schwelle ist; und
Erzeugen des Ergebnisses, dass die Authentifikation an dem Client-Ende nicht bestanden ist, wenn die Abstimmungsbewertung kleiner als die Schwelle ist.

5. System zur Authentifikation durch Kombination von Identität und Privileg, umfassend:
eine Extrahiereinheit, ausgelegt zum Beschaffen des Privileg-Sicherheitsniveaus, das einem Client-Ende entspricht, und Senden des Privileg-Sicherheitsniveaus zu der biometrischen Verarbeitungseinheit;
eine biometrische Verarbeitungseinheit, ausgelegt zum Erfragen des Identitäts-Sicherheitsniveaus, das dem Privileg-Sicherheitsniveau entspricht, gemäß einer hergestellten Beziehung der Assoziation zwischen Privileg-Sicherheitsniveau und
Identitäts-Sicherheitsniveau, Bestimmen der Authentifikationsparameter zur Identitätsauthentifikation gemäß dem Identitäts-Sicherheitsniveau und Senden der Authentifikationsparameter zu der Authentifizierungseinheit; und
eine Authentifizierungseinheit, ausgelegt zum Durchführen von Identitätsauthentifikation an dem Client-Ende unter Verwendung der Authentifikationsparameter und Erhalten eines Authentifikationsergebnisses.

6. System zur Authentifikation durch Kombination von Identität und Privileg nach Anspruch 5, ferner umfassend: eine Anwendungseinheit (601), eine Einheit, ausgelegt zum Transferieren von Identitätsinformationen (602) und eine Einheit zum Sammeln von biometrischen Informationen (604), wobei
die Anwendungseinheit ausgelegt ist zum Empfangen einer Zugriffsanforderung von dem Client-Ende;
Aufrufen der Einheit zum Transferieren von Identitätsinformationen nach dem Empfang der Zugriffsanforderung von dem Client-Ende;
wobei die zum Transferieren von Identitätsinformationen ausgelegte Einheit ausgelegt ist zum Senden einer Anforderung eines Attribut-Zertifikats und biometrischen Zertifikats zu dem Client-Ende, Empfangen des Attribut-Zertifikats und biometrischen Zertifikats von dem Client-Ende, Senden des Attribut-Zertifikats zu der Extrahiereinheit, Senden des biometrischen Zertifikats zu der Authentifizierungseinheit und Aufrufen der biometrischen Verarbeitungseinheit; und die zum Sammeln von biometrischen Informationen ausgelegte Einheit ausgelegt ist zum Sammeln biometrischer Informationen des Benutzers und Senden der biometrischen Informationen des Benutzers zu der biometrischen Verarbeitungseinheit.

7. System zur Authentifikation durch Kombination von Identität und Privileg nach Anspruch 5, wobei die biometrische Verarbeitungseinheit (605) eine Assoziiereinheit (801), eine Parametererzeugungseinheit (802), eine Einheit zum Erzeugen von biometrischen Vorlagen lebender Wesen (803) und eine Einheit zum Extrahieren eines biometrischen Zertifikats (804) umfasst, wobei
die Assoziiereinheit ausgelegt ist zum Beschaffen der Beziehung der Assoziation zwischen Privileg-Sicherheitsniveau und Identitäts-Sicherheitsniveau; Erfragen des Identitäts-Sicherheitsniveaus, das der Privileg-Sicherheit entspricht, gemäß der Beziehung der Assoziation zwischen Privileg-Sicherheitsniveau und Identitäts-Sicherheitsniveau; und Senden des Identitäts-Sicherheitsniveaus zu der Parametererzeugungseinheit;
die Parametererzeugungseinheit ausgelegt ist zum Erzeugen von Authentifikationsparametern entsprechend dem von der Assoziiereinheit empfangenen Identitäts-Sicherheitsniveau und Senden der Parameter zu der Einheit zum Erzeugen von biometrischen Vorlagen lebender Wesen;
die Einheit zum Erzeugen von biometrischen Vorlagen lebender Wesen ausgelegt ist zum Erzeugen einer biometrischen Vorlage eines lebenden Wesens gemäß den Authentifikationsparametern von der Parametererzeugungseinheit und biometrischen Informationen des Benutzers; und
die Einheit zum Extrahieren des biometrischen Zertifikats ausgelegt ist zum Extrahieren der biometrischen Vorlage des Benutzers aus einem empfangenen biometrischen Zertifikat.

## Revendications

1. Procédé d'authentification par combinaison d'identité et de privilège, comprenant :
l'acquisition du niveau de sécurité de privilège correspondant à une extrémité client (402) ;
le fait de se renseigner sur niveau de sécurité d'identité correspondant au niveau de sécurité de privilège en fonction d'une relation établie d'association entre le niveau de sécurité de privilège et le niveau de sécurité d'identité (403) ;
la détermination de paramètres d'authentification pour l'authentification d'identité en fonction du niveau de sécurité d'identité (404) ;
l'exécution d'une authentification d'identité à l'extrémité client en utilisant les paramètres d'authentification (405) ; et
l'obtention d'un résultat d'authentification (406).

2. Procédé d'authentification par combinaison d'identité et de privilège selon la revendication 1, dans lequel la relation établie d'association entre le niveau de sécurité de privilège et le niveau de sécurité d'identité est mémorisée dans un certificat d'algorithme biométrique, ou dans une base de données, ou dans un fichier.

3. Procédé d'authentification par combinaison d'identité et de privilège selon la revendication 1, dans lequel l'acquisition du niveau de sécurité de privilège correspondant à une extrémité client comprend :
la réception d'une requête d'accès depuis l'extrémité client (502) ;
l'envoi d'une requête demandant un certificat biométrique et un certificat d'attribut à l'extrémité client (503) ; et
l'acquisition du niveau de sécurité de privilège à partir du certificat d'attribut reçu de l'extrémité client (504-505).

4. Procédé d'authentification par combinaison d'identité et de privilège selon la revendication 1, dans lequel les paramètres d'authentification comprennent :
des paramètres d'algorithme pour traiter un modèle biométrique d'être vivant, des paramètres d'algorithme de mise en correspondance et un seuil ;
l'exécution d'une authentification d'identité à l'extrémité client en utilisant les paramètres d'authentification comprend :
l'acquisition d'un modèle biométrique d'utilisateur à partir du certificat biométrique reçu de l'extrémité client ;
la génération d'un modèle biométrique d'être vivant en fonction des informations biométriques d'utilisateur reçues de l'extrémité client ;
la mise en correspondance du modèle biométrique d'être vivant avec le modèle biométrique d'utilisateur pour obtenir un score de correspondance ;
la génération du résultat selon lequel l'authentification à l'extrémité client a réussi si le score de correspondance est supérieur ou égal au seuil ; et
la génération du résultat selon lequel l'authentification à l'extrémité client a échoué si le score de correspondance est inférieur au seuil.

5. Système d'authentification par combinaison d'identité et de privilège, comprenant :
une unité d'extraction, configurée pour acquérir le niveau de sécurité de privilège correspondant à une extrémité client, et envoyer le niveau de sécurité de privilège à l'unité de traitement biométrique ;
une unité de traitement biométrique, configurée pour se renseigner sur le niveau de sécurité d'identité correspondant au niveau de sécurité de privilège en fonction d'une relation établie d'association entre le niveau de sécurité de privilège et le niveau de sécurité d'identité, déterminer les paramètres d'authentification pour l'authentification d'identité en fonction du niveau de sécurité d'identité, et envoyer les paramètres d'authentification à l'unité d'authentification ; et
une unité d'authentification, configurée pour exécuter une authentification d'identité à l'extrémité client en utilisant les paramètres d'authentification et obtenir un résultat d'authentification.

6. Système d'authentification par combinaison d'identité et de privilège selon la revendication 5, comprenant en outre : une unité d'application (601), une unité configurée pour transférer des informations d'identité (602), et une unité pour collecter des informations biométriques (604), dans lequel :
l'unité d'application est configurée pour recevoir une requête d'accès depuis l'extrémité client ; faire appel à l'unité pour transférer des informations d'identité après la réception de la requête d'accès depuis l'extrémité client ;
l'unité configurée pour transférer des informations d'identité est adaptée pour envoyer une requête demandant un certificat d'attribut et un certificat biométrique à l'extrémité client, recevoir le certificat d'attribut et le certificat biométrique depuis l'extrémité client, envoyer le certificat d'attribut à l'unité d'extraction, envoyer le certificat biométrique à l'unité d'authentification, et faire appel à l'unité de traitement biométrique ;
l'unité configurée pour collecter des informations biométriques est adaptée pour collecter des informations biométriques d'utilisateur et envoyer les informations biométriques d'utilisateur à l'unité de traitement biométrique.

7. Système d'authentification par combinaison d'identité et de privilège selon la revendication 5, dans lequel l'unité de traitement biométrique (605) comprend une unité d'association (801), une unité de génération de paramètres (802), une unité de génération de modèle biométrique d'être vivant (803), et une unité d'extraction de certificat biométrique (804), dans lequel :
l'unité d'association est configurée pour acquérir la relation d'association entre le niveau de sécurité de privilège et le niveau de sécurité d'identité ; se renseigner sur le niveau de sécurité d'identité correspondant à la sécurité de privilège en fonction de la relation d'association entre le niveau de sécurité de privilège et le niveau de sécurité d'identité ; envoyer le niveau de sécurité d'identité à l'unité de génération de paramètres ;
l'unité de génération de paramètres est configurée pour générer des paramètres d'authentification correspondant au niveau de sécurité d'identité reçu de l'unité d'association, et envoyer les paramètres à l'unité de génération de modèle biométrique d'être vivant ;
l'unité de génération de modèle biométrique d'être vivant est configurée pour générer un modèle biométrique d'être vivant en fonction des paramètres d'authentification provenant de l'unité de génération de paramètres et des informations biométriques d'utilisateur ; et
l'unité d'extraction de certificat biométrique est configurée pour extraire un modèle biométrique d'utilisateur à partir d'un certificat biométrique reçu.
